Europäisches Patentamt

European Patent Office

Office européen des brevets

(19)

(11) Publication number: **0 082 010**
**B1**

(12) **EUROPEAN PATENT SPECIFICATION**

(45) Date of publication of patent specification: **16.07.86**

(51) Int. Cl.⁴: **H 02 G 15/18, B 29 C 35/00**

(21) Application number: **82306665.9**

(22) Date of filing: **14.12.82**

(54) Support for a closure assembly.

(30) Priority: **15.12.81 GB 8137818**

(43) Date of publication of application:
**22.06.83 Bulletin 83/25**

(45) Publication of the grant of the patent:
**16.07.86 Bulletin 86/29**

(84) Designated Contracting States:
**AT BE CH DE FR IT LI NL SE**

(56) References cited:
**EP-A-0 025 691**
**EP-A-0 050 009**
**FR-A-2 349 936**
**FR-A-2 388 432**
**US-A-3 982 564**
**US-A-4 282 397**

(73) Proprietor: **N.V. RAYCHEM S.A.**
**Diestsesteenweg 692**
**B-3200 Kessel-lo (BE)**

(72) Inventor: **Nolf, Jean Marie Etienne**
**Chaussee de Namur 6**
**B-5990 Hamme-mille (BE)**

(74) Representative: **Benson, John Everett et al**
**Raychem Limited Intellectual Property Law**
**Department Swan House 37-39, High Holborn**
**London WC1 (GB)**

Courier Press, Leamington Spa, England.

## Description

This invention relates to a closure assembly, especially one suitable for use in the protection, splicing or insulation of supply lines such as electric cables, particularly for the telecommunications or power industries.

Closure assemblies, especially ones having a shrinkable outer sleeve, are now widely used in many areas where insulation, sealing or encapsulation are required. Usually these sleeves recover, on heating or other treatment, towards an original shape from which they have previously been deformed, but we are also concerned with sleeves which adopt new configurations, even if they have not been previously deformed.

Sleeves which shrink under the direct action of heat may be made from a polymeric material exhibiting the property of elastic or plastic memory as described, for example, in US. Patents US—A—2,027,962; 3,086,242 and 3,957,372. In a variation of this idea, as described, for example, in British Patent GB—A—1,440,524, an elastomeric member such as an outer tubular member is held in a stretched state by a second member, such as an inner tubular hold-out member, which, upon heating weakens and thus allows the elastomeric member to recover. In addition to tubular sleeves, wrap-around sleeves with closures have also been developed e.g. as described in US Patents US—A—3,379,218 and British Patents GB—A—1,155,470; 1,211,988 and 1,346,479. Alternatively, the sheet·may be held in the wrapped-up configuration during recovery by means of an adhesive which may, in some cases, be applied on site.

One particular area of application of articles of the type described above is in the insulating and protection of junctions between supply lines, especially electric cables. In making such junctions, for example between telephone or power cables, many problems arise in meeting the necessary requirements of continuity of insulation and earthing, of sealing the joint against the ingress of contaminants such as moisture and insects and in providing the necessary strength of resistance to tension, compression, flexing and impact.

British·Patent·GB—A—1,431,167 discloses one type of sealing system, namely a heat-shrinkable sleeve, which may be a wrap-around sleeve, provided with a central reinforcement comprising longitudinally split tube. Typically such a tube is made from a pair of semi-cylindrical half shells, for example made from aluminium.

An alternative idea, which is disclosed and claimed in our US Patent US—A—4289553 is the use of an inner liner comprising a continuous thin metal foil provided with central reinforcing means comprising one or more longitudinally compressible coils. The assembly is re-enterable since the heat-shrinkable sleeve can be cut and removed and the coil(s) can be longitudinally compressed so as to allow access to the joint. Once repair or modification has been effected the coil(s) can return to their former configuration. However, because of the coil arrangement the use of a knife to cut the heat-recoverable sleeve/metal foil laminate is rather difficult since there is no continuous surface to support the tip of the knife. Also, this assembly tends to lack longitudinal strength.

In published Gebrauchsmuster DE—U—7805026 there is described an assembly having an insert formed from a roll of stiff moisture proof material having an internal aluminium foil liner, but this tends to suffer from capillary transfer along the outer surface of the liner and around the foil at its ends.

Our co-pending UK patent application GB—A—2059873 discloses a liner which is a laminate of the following layers, starting from the outer surface; Al foil, MYLAR polyester (Reg. T.M.), first pressboard, second pressboard, microporous MYLAR, and wax coating. Here the aluminium foil could be 10 bonded to the outer sleeve to prevent capillary transfer between them. Our UK Patent Publication GB—A—2069773 discloses a similar system, but based on a thermoplastics material rather than a cardboard.

Recoverability is an advantage in such closure assemblies since it affords a quick and reliable way of sealing the ends of the assembly to the substrates. It is desirable therefore that end portions of the sleeve be recoverable, and in many cases the whole of the sleeve is recoverable. The reason for this may be due to preferred manufacturing techniques or, where the sleeve is wrap around, due to the way sealing is achieved between the abutting or overlapping longitudinal edges of the sleeve. It is necessary that a flap be provided in sealing engagement with the longitudinal edges, and recovery of the sleeve can ensure the requisite tightness.

It is important to ensure that this flap is properly sealed against the inside of the abutting or overlapping portion of the sleeve. This is even more important in a form of wraparound sleeve where, instead of being formed integrally therewith, the flap is provided as a discrete sealing member.

As mentioned above, the flap is provided in order to maintain a seal between the two edges, particularly where the splice case is pressurised. A channel can be provided to hold together upstanding rails which project from edge portions of the sleeve. This channel provides the necessary clamping force to hold the rails together whilst the sleeve is recovered and any sealant present caused to melt and flow. When installation is complete the sealant in conjunction with the flap provides a barrier to pressure within the splice case and increases the leak path. In order for the flap to do its job properly it must be in tight contact with the sleeve at the base of the two rails, and thereby bridge the two rails. Where the sleeve is recoverable throughout its length, this tight contact can be ensured by the tension in the outer sleeve that results from its shrinkage: when the outer sleeve shrinks it causes the flap to be squeezed between the base of the rails and a rigid internal support member which will generally be provided around the wire splices themselves. Where the sleeve is recoverable only at its ends a special flap assembly such as that disclosed in our co-pending UK application 8130392 (published as GB—A—2085674) will be required. This can lead to a problem of ensuring proper positioning of the sleeve relative to the special flap assembly.

Where the closure assembly is to be used around a splice in pressurised cables it will have to withstand the pressure used in the cables, and as a result will have some special design features. The outer sleeve may be formed by moulding as disclosed in our UK Application 8132449 (published as GB—A—2106828), and v-seals may be incorporated at the regions where the sleeve meets the substrates to aid pressure retention, as disclosed in UK Publication GB—A—2040106. One advantage of a pressurised system is that the whole of the sleeve need not be bonded to the internal support.

In pressurized systems the internal support may be a canister formed of a sheet metal or plastics material, preferably aluminium. Alternatively it may be formed of end rings joined together by longitudinal members, and have a cage-like appearance. In unpressurised systems, or in less rugged pressurised systems, the support may be a roll of material comprising layers acting as support, moisture vapour barrier and heat barrier. A support based on cardboard and a support based on a thermoplastics material were referred to above.

A further feature of telecommunications and power cables that should be mentioned is their shielding layer. A shielding layer, which may be an aluminium tape or a copper braid etc., is provided around the cable bundle, but inside the outer jacket. In a splice between two cables it is necessary to provide some means of continuity between the shield on the two cables. One way of doing this is to use a wire with a crocodile clip at each end which can be clipped on to each cable shield to provide a bridge. Although this gives ground continuity, the splice itself is not shielded. Furthermore, where the cables are carried above ground it may be desirable that a series of drain points are provided along the cable from the shielding layer down to earth. This can prevent damage that may otherwise occur during lightning strikes.

A modification to a support has now been designed which is particularly useful in pressurised systems where location of an outer sleeve or where pressure access is required. The modification will also be useful in other circumstances, such as where shielding drainage is required.

Thus, the present invention provides an assembly suitable for enclosing a substrate, which comprises:
an inner support;
an outer sleeve; and
means for sealing the sleeve (18) to the substrate (16);
characterized by the inner support (1) being provided with an outwardly extending appendage (2), the outer sleeve having a hole therein for cooperation with the appendage (2), and
the appendage (2) providing communication from the support (1) to the outside of the assembly.

The outer sleeve is preferably of a plastics material and the support is preferably a metal canister, more preferably one comprising two half shells supported by end pieces. The end pieces may comprise rings which support the half shells and longitudinally extending fingers which can be bent inwards to provide a gentle transition in the support so that the assembly can be used to enclose a cable splice, which has a bulky central portion between relatively thin cables. Instead of half shells, the support may comprise rods or bars, thus having a cage-like appearance. Other supports include the paper or plastics arrangements described above.

The outer sleeve is preferably recoverable (generally heat shrinkable) at its ends to ensure good sealing to the cables or other substrates. This recoverability may constitute the sole means of sealing the sleeve to the substrate, however a coating of adhesive or clips such as jubilee clips are preferred. The central portion is preferably dimensionally stable, since splitting may otherwise occur in the region of the hole. Furthermore good sealing around the hole could be difficult if the hole were in a recoverable portion. As it is, the appendage can carry a screw thread allowing a washer and nut to fix the sleeve to the support at that point, achieving a perfect pressure and environmental seal.

The communication between the support and the outside of the assembly is important, and examples have been alluded to in the discussion above concerning some of the requirements of this type of closure assembly. Thus, communication can be, for example, electrical, gaseous or mechanical, or a combination of any of these. Mechanical communication can mean simply location of the components of the assembly, or mechanical access to the inside of the assembly.

It has been proposed, see UK publication GB—A—1585154, to provide a valve on an outer sleeve for pressure access.

Fixing a valve in the sleeve, however, cannot easily provide for proper location of the sleeve, or for an electrical access to the cable shielding. Also it would be desirable that the valve be located over a hole in the inner support, and this imposes a further requirement for location. A further point is that the valve, or other appendage, can be secured far more ruggedly if it is attached to the support than if it is attached to the plastics outer sleeve. As a result it could be used as a fixing or attachment point for the splice case to a support.

Four instances of communication from inside the assembly to outside will be briefly summarised.

The first is access to the shielding of the cables, mentioned above as being useful where the cables to be spliced are carried above ground. In the present system the continuity in shielding can be achieved by the support itself. If the support is a metal canister it will make electrical connection with exposed shielding at each cable and will surround the cable splice. The appendage, which may be integral with or attached to the support will be of electrically conducting material, and can be connected to a drain wire which runs to earth. If desired, each splice case could be earthed in this way. This arrangement avoids the need for additional parts such as shield continuity wires and clips. In fact no extra wires are needed at all, as would be the case if the appendage were on the outer sleeve. Assembly is easy: the support is placed around the splice after stripping the cable jackets to expose the shielding, and the outer sleeve is installed. Shield continuity and an access are thus automatically achieved.

Secondly, pressure input or access for measurement can be provided for. In this case the appendage need not be electrically conductive, but metal may in any case be the most suitable material. The appendage will of course be hollow, but it need not incorporate a valve since a separate valve could be attached to it. however, for most purposes, the appendage will simply be a valve which is attached to a hole in the support. Pressurised systems do not require a hot-melt adhesive or sealant on the internal surface of the outer sleeve, so re-entry will be simple. A further requirement of pressurized systems will generally be v-seals, which are described below in connection with the drawings.

A third use of the appendage is for mechanical communication to achieve proper orientation between the various components of the assembly. This may in some cases be the only use of the appendage but it will often be a beneficial side effect of the provision of a valve or of the electrical connector. The appendage fits in the hole in the sleeve thus locating the sleeve with respect to the support. This may be useful merely for ease of assembly, but it will be especially useful where the outer sleeve is of wrap-around form, and the longitudinal edges of the sleeve have to be positioned over a flap assembly for proper sealing between them. The flap assembly can conveniently be stuck to the canister by the manufacturer (or alternatively by the worker on site) and as a result proper alignment of the sleeve with the canister results in its proper alignment with the flap assembly. Another instance where alignment may be desired is where a small cable branches from a large cable: here it is desirable that the rails of a wrap around sleeve lie over the larger cable.

The fourth example is again mechanical. It may be desirable to secure the closure assembly to a post or other structure, either to aid assembly or for convenient or safe positioning during use. Attachment simply to the outer plastics sleeve or to the cables may cause damage, whereby with the present system secure attachment could be provided by bolting or otherwise attaching the rugged internal support directly to the external structure.

The invention is further illustrated, by way of example, by the accompanying drawings in which:

Figure 1 is an exploded view showing the components of a support canister;

Figure 2 is a view of an assembled support canister;

Figure 3 shows a splice case to be re-entered; and

Figure 4 is a cross-section of a re-entered splice case.

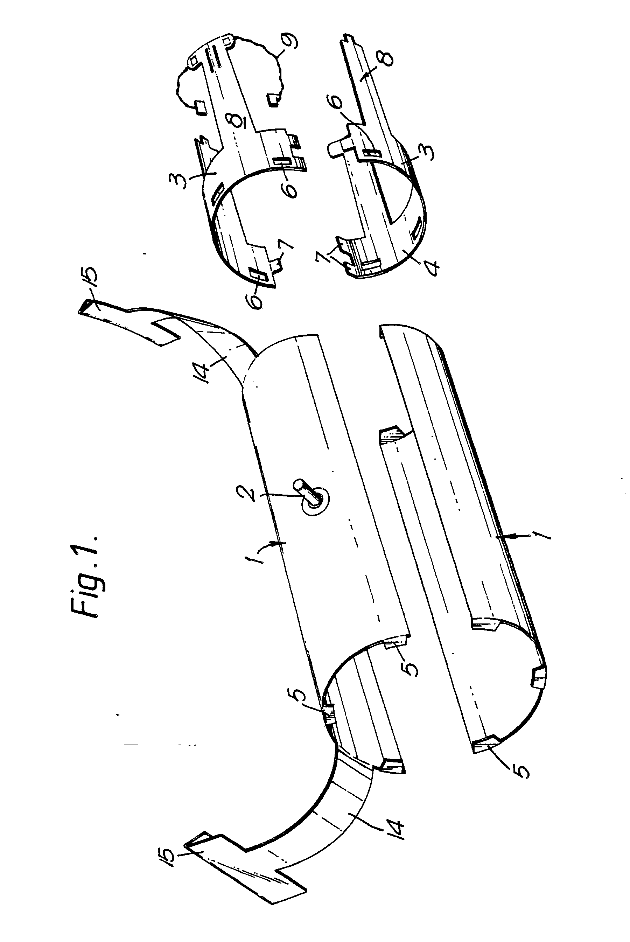

The support illustrated is a canister made from sheet material, such as aluminium or a plastics material, although a cage-like structure could be used. The main part of the support comprises two half-shells (1), which slot together to form a tubular support which can be placed around a cable splice and over which an outer sleeve can be installed. The support could, of course, be of one piece cylindrical design but it is better split so that it can be installed around a cable splice without disconnecting all of the wires. The method of joining the two half shells together is not critical, although it is of course desirably rigid and reliable. The two half-shells can be permanently hinged together along one pair of longitudinal edges, the other pair simply abutting, or interengaging by means of appropriately located tabs. Alternatively, the half shells can be completely separated, as illustrated, and both pairs of longitudinal edges optionally interengaging by means of tabs which can function as temporary hinges. Since it is desirable that the closure assembly, of which the canister forms an internal support, conforms well to the size and shape of the cable splice or other substrate to be protected, end pieces (3, 4) are provided to provide a gentler transition from the larger splice to the smaller cables. As with the half shells (1), the end pieces (3, 4) are preferably split or in two pieces so that they can be "wrapped around" the substrate. They may be conical in shape or, as shown, they may comprise rings which run circumferentially at the ends of the half shells, and fingers (8) which extend longitudinally from the rings and which can be bent inwards to provide the smooth transition — in general a transition will be required at each end of the half shells but in Figure 1 only one is shown. In the embodiment illustrated the end pieces (3, 4) act as support for the half shells, and therefore fit inside the ends of the half shells. As a result the end pieces are provided with locating tabs (7) to ensure rigidity. Alternatively, the end pieces could fit around the outside of the half shells, in which case the half shells would desirably be provided with locating tabs, as mentioned above. Location of the half shells (1) with respect to the end pieces (3, 4) is achieved by tabs (5) on the half shells and slots (6) in the end pieces (3, 4). If desired, the tabs could be provided in the end piece and the slots in the half shells, although such an arrangement may have the disadvantage of presenting a rough surface to an outer sleeve due to the protruding tabs. One or more of the fingers (8) may be provided with a tie wrap (9) to hold the fingers down against the cable or other substrate.

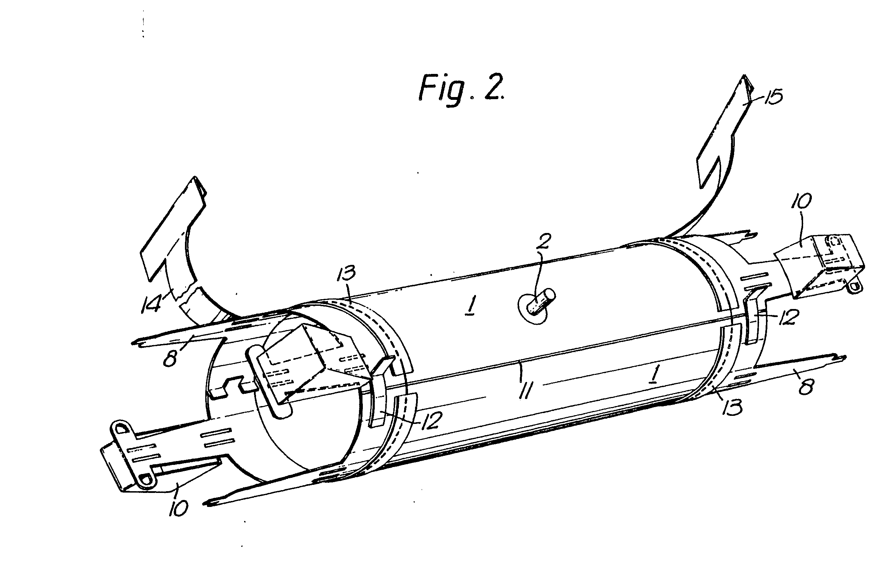

It was mentioned above that the canister of this invention could be used as a support for pressurized system, and that such a system may employ a wrap around outer sleeve which is recoverable only at its ends and which therefore requires some means of forcing a sealing flap against the internal surface of the sleeve to seal its abutting or overlapping edges. Furthermore, some outer sleeves do not possess an integral flap, due to the way they are made, and as a result the flap has to be provided independently. It is this flap and sealing means (as a unitary flap assembly) which is illustrated in Figures 1 and 2 at (14) and which is described more fully in our co-pending UK Patent Application 8130392 published as GB—A—2085674. In the drawings, the flap assembly (14) includes end v-seals (15) which aid pressure retention at the regions where the closing assembly meets the substrate. The flap assembly (14) is bonded to one of the half shells and since the assembly must be properly located with respect to the outer sleeve, the problem reduces to locating the outer sleeve with respect to the half shells. It is this which can be achieved by means of the appendage (2). The outer sleeve will have a hole in a central, heat stable part, through which the appendage 2 will fit, thus properly locating the longitudinal edges or rails of the sleeve over the flap assembly. The appendage may serve as a pressure inlet or access point in which case it will be hollow (and preferably incorporate a valve), or it may be conductive to serve as a drain point for the cable shielding; the half shells themselves providing shield continuity between the cables to be spliced. The last feature will often be useful where the system concerned is an overground cable connection which could be subjected to lightning strikes. The appendage may be positioned and constructed to fulfill any one or more of these functions, and in any case it may have an external screw thread over which can be put a washer and a nut for providing a seal.

In Figure 2 the canister is shown assembled. The two half shells are held together by small pieces of tapes (12), which can easily be removed to separate the half shells in order to position them around the cable splice. The tapes (12) can then be replaced. Further tapes (13) are shown securing the half shells to the end pieces, although the system of tabs (5) and slots (6) is sufficiently good that these tapes (13) are generally not required. It will be appreciated that where tapes (13) are used they will preferably be broken at the joints in the half shells to enable the half shells to be separated. The half shells are preferably of such a size or design that when assembled a gap (11) remains between them. The purpose of gap (11) is to enable a screwdriver to be used to separate the half shells on re-entry. Figure 2 shows foam blocks (10) secured to some of the fingers (8). Where the canister is to be used around a cable branch-off, a branch-off clip will desirably be used to ensure a proper seal between the outer sleeve and the diverging cables, and the purpose of the foam blocks (10) is to ensure intimate contact of the sleeve at the tip of the clip.

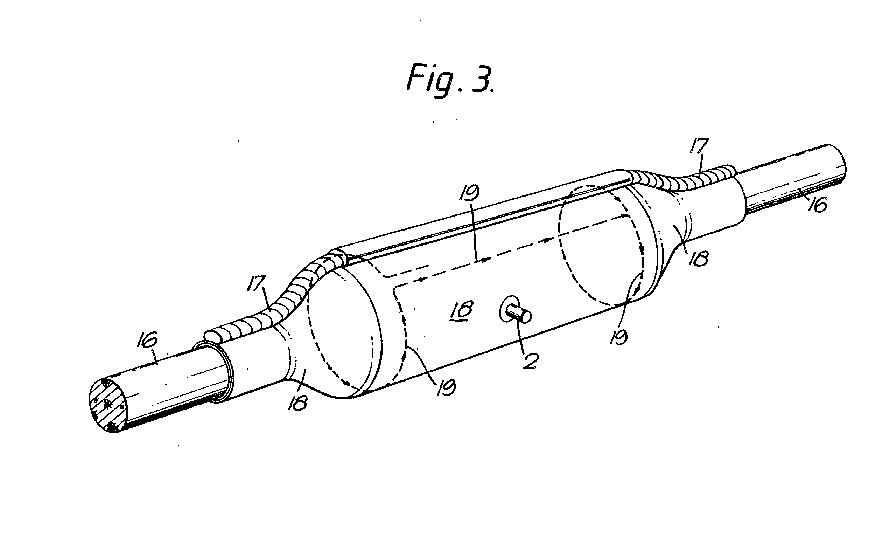

Figure 3 shows in perspective view a cable splice case, and a way of re-entering it. Cables (16) are joined and enclosed by an outer sleeve (18) which is of the wraparound type, opposed longitudinal edges bearing rails and being held together by a channel (17). This method of joining is disclosed in our UK Patent 1155470. The end portions of the sleeve can be seen to taper from the larger diameter of the splice to the smaller diameter of the cables. As mentioned above, this larger central portion may be unexpanded and therefore remain heat stable: only the end portions shrinking during assembly. The central portion has a hole through which protrudes the appendage (2). Since the hole is in a heat stable part sealing is simple and may be effected by a washer and nut. Re-entry may be carried out as follows. First, the washer and nut are removed, and rail and channel (17) are removed from the central portion by sawing. Then cuts are made in the sleeve, following the dotted lines (19), allowing a central portion of the sleeve to be removed. In a pressurised system it is generally not necessary to provide an adhesive bond between the outer sleeve and the canister to prevent capillary transfer between the two, and as a result the sleeve can be removed cleanly from the canister. Where such a bond is required, re-entry can be made easier by employing one of the methods disclosed in our co-pending UK Patent Application 8102931 published as GB—A—2093402. In the situation referred to the sleeve will be able to be removed from the canister cold, but if no such provision has been made it may be necessary to heat the splice case to soften any adhesive present.

After the sleeve has been removed, a screwdriver is used to separate the half shells. After the splice has been attended to a new sleeve is installed around the old canister and the butts of the old splice case. In a pressurised system new v-seals will probably be needed at the regions where the new outer sleeve will meet the butts of the old sleeve. In general a new flap assembly (14) will not be needed, although for ease of assembly the new v-seals may form part of a flap v-seal assembly.

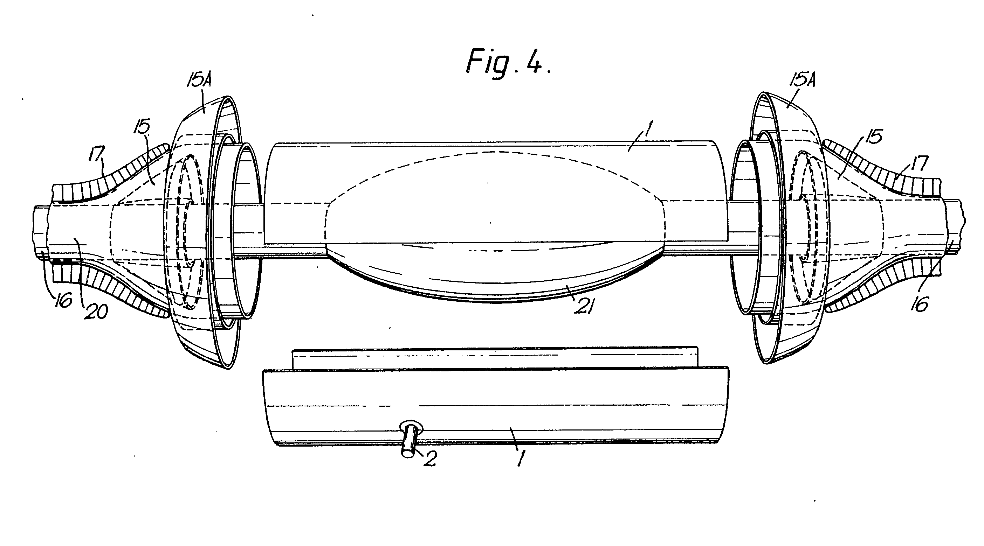

Figure 4 shows in cross-section a re-entered splice case which is being re-built. A central portion of the sleeve has been removed leaving two butts (20). The butts still carry a part of the rail and channel (17), the remainder having been sawed off as a preliminary to removing the central portion of the sleeve. Inside the butt can be seen the original v-seals (15) for pressure retention. The v-seals work by presenting to the pressure within the splice case a concave surface so that the adhesive between the sleeve (20) and

the cables (16) is not put in peel by the pressure. The canister (1) is shown partly in place around the splice bundle (21), although the end pieces are omitted for clarity. The end pieces could remain embedded in the butts (20) of the old sleeve; the design of the canister allowing the half shells to be removed for inserting without disturbing the end pieces.

When the splice case is to be re-built, further v-seals (15A) are installed around the butts (20) of the old sleeve. These new v-seals (15A) have the usual function of putting the adhesive which will bond the new outer sleeve out of peel, but they are also useful in eliminating hoop stress in those regions of the butts (20) which no longer have a rail and channel (17). This latter effect can be explained as follows. Pressure in the re-built splice case will operate inside the old v-seals (15) to cause the butts (20) to open out at their cylindrical portions where there is no longer a rail and channel. This would put the adhesive in that region into creep. The presence of a new v-seal (15A) over the top of this portion, however, gives rise when the system is pressurised to a contractive force on the butts (20) which cancels the expansive force caused by pressure in the old v-seals (15). As a result there is no nett hoop-stress on the butts (20), and the system is therefore stable.

**Claims**

1. An assembly suitable for enclosing a substrate, which comprises:

an inner support (1);

an outer support (18);

means for sealing the outer sleeve (18) to the substrate (16);

characterized by the inner support (1) being provided with an outwardly extending appendage (2), the outer sleeve having a hole therein for cooperation with the appendage (2), and

the appendage (2) providing communication from the support (1) to the outside of the assembly.

2. An assembly according to claim 1, wherein the outer sleeve is recoverable over at least part of its surface.

3. An assembly according to claim 2, wherein end portions of the outer sleeve are recoverable, the hole being in a dimensionally stable central portion.

4. An assembly according to claim 3, wherein the end portions are internally coated with a heat-activatable adhesive.

5. An assembly according to any preceding claim, wherein the outer sleeve is a wrap around sleeve.

6. An assembly according to claim 5, wherein the outer sleeve has upstanding rails at or adjacent longitudinal edges thereof, and the assembly additionally comprises a channel which can be installed over the rails to hold the rails together.

7. An assembly according to any preceding claim, wherein the support comprises a substantially cylindrical metal canister.

8. An assembly according to claim 7, wherein the canister is longitudinally split.

9. An assembly according to claim 8, wherein the canister comprises two half-shells.

10. An assembly according to claim 9, wherein the support additionally comprises end pieces which support the half-shells.

11. An assembly according to claim 10, wherein the half-shells engage with the end pieces by means of co-operating tabs and slots.

12. An assembly according to claim 11, wherein the half-shells and end pieces are held in engagement by removable adhesive tapes.

13. An assembly according to any of claims 10—12, wherein the end pieces bear longitudinally extending fingers which allow the support to accommodate a substrate of varying size.

14. An assembly according to claim 5 or 6, wherein the support carries a flap over which abutting or overlapping longitudinal edges of the wrap around outer sleeve will lie, in order to effect a seal between said edges, when the hole is correctly positioned over the appendage.

15. An assembly according to claim 14, wherein said flap comprises a foam material which is compressed when the sleeve is wrapped around the support.

16. An assembly according to any preceding claim, wherein the appendage carries an external thread.

17. An assembly according to any preceding claim, wherein the appendage and the support are electrically conductive, and are electrically in contact with one another.

18. An assembly according to any preceding claim, wherein the appendage is hollow.

19. An assembly according to claim 18, wherein the appendage comprises a one-way valve.

20. An assembly according to any preceding claim, which additionally comprises at least one v-seal.

21. A cable splice enclosed by an assembly according to any preceding claim.

22. A method of environmentally enclosing a substrate, which comprises:

(A) surrounding the substrate by an inner support (1)

(B) surrounding the support by an outer sleeve (18); and

(C) sealing the ends of the outer sleeve to the substrate;

characterized by the inner support (1) being provided with an outwardly extending appendage (2) and the outer sleeve (18) having a hole therein that overlies the appendage (2) thereby locating the outer sleeve (18) on the support (1) and by the method including causing the hole to be sealed.

23. A method according to claim 22, wherein the ends at least of the outer sleeve are heat recoverable and coated with a heat-activatable adhesive, and the sealing step (d) comprises heating the ends of the outer sleeve.

24. A method of environmentally enclosing a cable splice by means of a support (1) and an outer sleeve (18) while providing earthing and continuity of shielding, characterized by

surrounding the splice (21) with an electrically conductive inner support (1) bearing an electrically conductive outwardly extending appendage (2), an end portion (8) of the support (1) being in contact with a shielding layer of each cable (16); surrounding the support (1) with an outer sleeve (18) having a hole therein which overlies the appendage (2);

causing the hole to be sealed;

sealing the ends of the outer sleeve (18) to the substrate (16); and

electrically connecting the appendage (2) to earth.

## Patentansprüche

1. Anordnung, die zum Umschließen eines Substrats geeignet ist und aufweist:

eine innere Einlage (1),

eine äußere Muffe (18) und

Mittel zum Abdichten der äußeren Muffe (18) gegen das Substrat (16),

dadurch gekennzeichnet, daß die innere Einlage (1) mit einem nach außen sich erstreckenden Fortsatz (2) versehen ist, und daß die äußere Muffe eine Öffnung zum Zusammenarbeiten mit den Fortsatz (2) darin hat, und

daß der Fortsatz (2) eine Verbindung von der Einlage (1) mit der Außenseite der Anordnung herstellt.

2. Anordnung nach Anspruch 1, dadurch gekennzeichnet, daß die äußere Muffe wenigstens an einem Teil ihrer Fläche rückstellbar ist.

3. Anordnung nach Anspruch 2, dadurch gekennzeichnet, daß die Endabschnitte der äußeren Muffe rückstellbar sind und daß sich die Öffnung in einem dimensionsmäßig stabilen Mittelabschnitt befindet.

4. Anordnung nach Anspruch 3, dadurch gekennzeichnet, daß die Endabschnitte innen mit einem wärmeaktivierbaren Kleber beschichtet sind.

5. Anordnung nach einem der vorangehenden Ansprüche, dadurch gekennzeichnet, daß die äußere Muffe eine Umwickelmuffe ist.

6. Anordnung nach Anspruch 5, dadurch gekennzeichnet, daß die äußere Muffe hochstehende Schienen an oder in der Nähe ihrer Längsränder hat, und daß die Anordnung zusätzlich ein U-Profilteil aufweist, das zum Zusammenhalten der Schienen über den Schienen montierbar ist.

7. Anordnung nach einem der vorangehenden Ansprüche, dadurch gekennzeichnet, daß die Einlage einen im wesentlichen zylindrischen Metallkanister aufweist.

8. Anordnung nach Anspruch 7, dadurch gekennzeichnet, daß der Kanister in Längsrichtung geteilt ist.

9. Anordnung nach Anspruch 8, dadurch gekennzeichnet, daß der Kanister zwei Halbschalen aufweist.

10. Anordnung nach Anspruch 9, dadurch gekennzeichnet, daß die Einlage zusätzlich Endstücke aufweist, die die Halbschalen stützen.

11. Anordnung nach Anspruch 10, dadurch gekennzeichnet, daß die Halbschalen mit den Endstücken mittels zusammenarbeitender Lappen und Schlitze in Eingriff sind.

12. Anordnung nach Anspruch 11, dadurch gekennzeichnet, daß die Halbschalen und die Endstücke durch lösbare Klebebänder in Eingriff gehalten sind.

13. Anordnung nach einem der Ansprüche 10 bis 12, dadurch gekennzeichnet, daß die Endstücke in Längsrichtung verlaufende Finger tragen, die ermöglichen, daß die Einlage ein Substrat mit sich ändernden Abmessungen aufnimmt.

14. Anordnung nach Anspruch 5 oder 6, dadurch gekennzeichnet, daß die Einlage eine Lasche trägt, über der aneinanderstoßende oder überlappende Längsränder der äußeren Umwickelmuffe liegen, um eine Abdichtung zwischen den Rändern zu bewirken, wenn die Öffnung genau über dem Fortsatz positioniert ist.

15. Anordnung nach Anspruch 14, dadurch gekennzeichnet, daß die Lasche einen Schaumstoff aufweist, der zusammengedrückt wird, wenn die Muffe um die Einlage gewickelt wird.

16. Anordnung nach einem der vorangehenden Ansprüche, dadurch gekennzeichnet, daß der Fortsatz ein Außengewinde aufweist.

17. Anordnung nach einem der vorangehenden Ansprüche, dadurch gekennzeichnet, daß der Fortsatz und die Einlage elektrisch leitend sind und elektrisch in Kontakt miteinander sind.

18. Anordnung nach einem der vorangehenden Ansprüche, dadurch gekennzeichnet, daß der Fortsatz hohl ist.

19. Anordnung nach Anspruch 18, dadurch gekennzeichnet, daß der Fortsatz ein Einwegventil aufweist.

20. Anordnung nach einem der vorangehenden Ansprüche, dadurch gekennzeichnet, daß sie zusätzlich wenigstens eine v-Dichtung aufweist.

21. Kabelspleißung, die durch eine Anordnung nach einem der vorangehenden Ansprüche umschlossen ist.

22. Verfahren zum Umschließen eines Substrats zur Umgebung hin, das aufweist:

(A) Umgeben des Substrats mit einer inneren Einlage (1),

(B) Umgeben der Einlage mit einer äußeren Muffe (18), und

(C) Abdichten der Enden der äußeren Muffe gegen das Substrat,

dadurch gekennzeichnet, daß die innere Einlage (1) mit einem nach außen sich erstreckenden Fortsatz (2) versehen ist, und daß die äußere Muffe (18) eine Öffnung darin hat, die über dem Fortsatz (2) liegt, wodurch die äußere Muffe (18) auf der Einlage (1) festgelegt wird, und daß das Verfahren umfaßt, daß eine Abdichtung der Öffnung bewirkt wird.

23. Verfahren nach Anspruch 22, dadurch gekennzeichnet, daß die Enden wenigstens der äußeren Muffe wärmerückstellbar sind und mit einem wärmeaktivierbaren Kleber beschichtet sind, und daß der Dichtungsschritt (d) aufweist, daß die Enden der äußeren Muffe erwärmt werden.

24. Verfahren zum Umschließen einer Kabelspleißung zur Umgebung hin mittels einer Einlage (1) und einer äußeren Muffe (18) unter Aufrechterhaltung einer Erdung und einer Stetigkeit der Abschirmung, dadurch gekennzeichnet, daß

die Spleißung (21) mit einer elektrisch leitenden inneren Einlage (1) umgeben wird, die einen elektrisch leitenden, sich nach außen erstreckenden Fortsatz (2) trägt, wobei ein Endabschnitt (8) der Einlage (1) in Kontakt mit einer Abschirmungsschicht jedes Kabels (16) ist, daß die Einlage (1) mit einer äußeren Muffe (18) umgeben wird, die eine Öffnung darin hat, die über dem Fortsatz (2) liegt,

daß eine Abdichtung der Öffnung bewirkt wird,

daß die Enden der äußeren Muffe (18) gegen das Substrat (16) abgedichtet werden, und

daß der Fortsatz (2) elektrisch mit der Erdung verbunden wird.

**Revendications**

1. Ensemble approprié pour envelopper un substrat, qui comprend:

un support intérieur (1);

un manchon extérieur (18);

des moyens servant à appliquer de manière étanche le manchon extérieur (18) sur le substrat (16)

caractérisé en ce que le support intérieur (1) est muni d'un appendice (2) s'étendant vers l'extérieur, le manchon extérieur présentant un trou destiné à coopérer avec l'appendice (2); et

l'appendice (2) établissant la communication entre le support (1) et l'extérieur de l'ensemble.

2. Ensemble selon la revendication 1, dans lequel le manchon extérieur est à reprise de forme sur au moins une partie de sa surface.

3. Ensemble selon la revendication 2, dans lequel les parties d'extrémités du manchon extérieur sont à reprise de forme, le trou se trouvant dans une partie centrale dimensionnellement stable.

4. Ensemble selon la revendication 3, dans lequel les parties d'extrémités sont revêtues intérieurement d'un adhésif sensible à la chaleur.

5. Ensemble selon une revendication précédente quelconque, dans lequel le manchon extérieur est un manchon d'enveloppement.

6. Ensemble selon la revendication 5, dans lequel le manchon extérieur possède des nervures redressées le long de ses bords longitudinaux ou dans la région de ses bords longitudinaux et l'ensemble comprend en outre un profilé qui peut être monté sur les nervures pour maintenir les nervures assemblées.

7. Ensemble selon une revendication précédente quelconque, dans lequel le support comprend une boîte métallique sensiblement cylindrique.

8. Ensemble selon la revendication 7, dans lequel la boîte est fendue longitudinalement.

9. Ensemble selon la revendication 8, dans lequel la boîte est composée de deux demi-coquilles.

10. Ensemble selon la revendication 9, dans lequel le support comprend en outre des pièces d'extrémités qui supportent les demi-coquilles.

11. Ensemble selon la revendication 10, dans lequel les demi-coquilles sont en prise avec les pièces d'extrémités au moyen de languettes et fentes qui coopèrent entre elles.

12. Ensemble selon la revendication 11, dans lequel les demi-coquilles et les pièces d'extrémités sont maintenues en prise par des rubans adhésifs amovibles.

13. Ensemble selon une quelconque des revendications 10 à 12, dans lequel les pièces d'extrémités portent des doigts s'étendant longitudinalement qui permettent au support de recevoir un substrat de dimension variable.

14. Ensemble selon l'une des revendications 5 et 6, dans lequel le support porte un onglet qui s'appuie sur les bords longitudinaux bout à bout ou à recouvrement du manchon extérieur d'enveloppement, pour réaliser un joint étanche entre lesdits bords, lorsque le trou est correctement positionné sur l'appendice.

15. Ensemble selon la revendication 14, dans lequel ledit onglet est constitué par une matière mousse qui est comprimée lorsque le manchon est enroulé autour du support.

16. Ensemble selon une revendication précédente quelconque, dans lequel l'appendice porte un filetage extérieur.

17. Ensemble selon une revendication précédente quelconque, dans lequel l'appendice et le support sont conducteurs de l'électricité et sont en contact électrique entre eux.

18. Ensemble selon une revendication précédente quelconque, dans lequel l'appendice est creux.

19. Ensemble selon la revendication 18, dans lequel l'appendice comprend un clapet unidirectionnel.

20. Ensemble selon une revendication précédente quelconque, qui comprend en outre au moins une garniture d'étanchéité en V.

21. Jonction de câble enveloppée par un ensemble selon une revendication précédente quelconque.

22. Procédé pour envelopper un substrat en l'isolant de l'environnement, qui consiste à:

(A) entourer le substrat d'un support intérieur (1);

(B) entourer le support d'un manchon extérieur (18); et

(C) appliquer les extrémités du manchon à joint étanche sur le substrat;

caractérisé en ce que le support intérieur (1) est muni d'un appendice (2) en saillie vers l'extérieur et en ce que le manchon extérieur (18) présente un trou qui entoure l'appendice (2), en fixant ainsi la position du manchon extérieur (18) sur le support (1) et par le fait que le procédé comprend la fermeture étanche du trou.

23. Procédé selon la revendication 22, dans lequel au moins les extrémités du manchon extérieur sont à reprise de forme thermique et enduites d'un adhésif sensible par la chaleur et en ce que la phase (d) de réalisation de l'étanchéité consiste à chauffer les extrémités du manchon extérieur.

24. Procédé pour isoler une jonction de câble l'environnement au moyen d'un support (1) et d'un manchon extérieur (18) tout en assurant la mise à la terre et la continuité du blindage, caractérisé en ce que:

on enveloppe la jonction (21) d'un support intérieur (1) conducteur de l'électricité qui porte un appendice conducteur de l'électricité (2) qui s'étend vers l'extérieur, une partie d'extrémité (8) du support (1) étant en contact avec une couche de blindage de chaque câble (16);

on entoure le support (1) d'un manchon extérieur (18) présentant un trou qui entoure l'appendice (2);

on établit la fermeture étanche du trou;

on applique les extrémités du manchon extérieur (8) sur la substrat (16); et

on connecte électriquement l'appendice (2) à la terre.

Fig. 1.

Fig. 2.

Fig. 3.

Fig. 4.